# FASCICULE DE BREVET EUROPEEN

(11) **EP 3 674 005 B1**
(45) Date de publication et mention de la délivrance du brevet: **04.05.2022**
(21) Numéro de dépôt: 19215003.5
(22) Date de dépôt: 10.12.2019
(51) Int. Cl.: B05B 11/00

(54) **POMPE POUR FLACON DE PRODUIT COSMÉTIQUE DOTÉE DE MOYENS DE PURGE D'AIR**
PUMPE FÜR FLAKON EINES KOSMETIKPRODUKTS, DIE MIT LUFTABLASSMITTELN AUSGESTATTET IST
PUMP FOR COSMETIC PRODUCT BOTTLE PROVIDED WITH MEANS FOR PURGING AIR

(30) Priorité: 24.12.2018 FR 1874128
(43) Date de publication de la demande: 01.07.2020
(73) Titulaire: Albéa Services, 92230 Gennevilliers (FR)
(72) Inventeur: ROSSIGNOL, Eric, 71100 Chalon sur Saone (FR)
(74) Mandataire: Gevers & Orès

(56) Documents cités:
- FR-A1- 2 723 618
- US-A- 5 979 711
- US-A1- 2004 026 458
- US-A1- 2004 265 157
- US-B1- 6 279 784

## Description

### Domaine de l'invention

L'invention concerne une pompe pour un flacon de produit cosmétique qui est dotée de moyens de purge d'air. L'invention se rapporte également à un flacon comprenant une telle pompe.

Certains flacons de produits cosmétiques sont pourvus d'une pompe configurée pour aspirer le produit cosmétique contenu dans le réservoir du flacon afin de le distribuer, par exemple au moyen d'une buse ou par une simple ouverture. Le produit peut ainsi être extrait ou pulvérisé du flacon afin de permettre son application. La pompe est souvent actionnée au moyen d'un bouton poussoir sur lequel l'utilisateur exerce une pression pour déclencher le fonctionnement de la pompe. Une pompe comprend en particulier une chambre de dosage dont le volume varie pour permettre l'aspiration du produit dans la chambre par un orifice d'entrée, lorsque le volume augmente, puis son expulsion en dehors de la chambre par un orifice de sortie, lorsque le volume de la chambre diminue. Le produit sort de la chambre dans un conduit de distribution, qui le mène à l'ouverture ou à la buse habituellement agencée sur le bouton poussoir. Le document US5979711A divulgue un dispositif de décharge selon l'art antérieur.

### Etat de la technique

Pour la distribution des sprays, c'est-à-dire d'un jet de fluide dispersé sous forme de gouttelettes de taille inférieure à 100µm, il est nécessaire de mettre le produit sous pression avant sa distribution. Le produit est alors distribué avec suffisamment d'énergie pour que son écoulement soit déstabilisé et que le produit soit dispersé sous forme de gouttelettes en sortie du flacon. Le produit peut-être un parfum ou bien une lotion peu visqueuse de type lait.

De telles pompes, dites à pré-compression, sont connues de l'art antérieur. Le problème de ces pompes est qu'elles présentent des parties métalliques, tels des ressorts, qui se trouvent en contact avec le produit à distribuer et qui compliquent le tri des composants pour le recyclage de la pompe.

Il a donc été proposé dans l'art antérieur des pompes à pré-compression constituées d'une membrane élastique qui permet de limiter le nombre de composants métalliques, voire de s'en affranchir totalement. On connait des distributeurs de produits fluides comprenant de telles pompes à membrane élastique, avec une tige traversant la membrane au niveau d'une lèvre annulaire élastique. Cette lèvre annulaire au contact de la tige forme un clapet de sortie pour la pompe, la tige formant le siège du clapet. En position de repos, le bouton d'actionnement est maintenu en butée haute sous l'effet de l'élasticité de la membrane, et la lèvre annulaire est au contact de la tige et assure une fermeture étanche du clapet de sortie. Lorsque le bouton est actionné, le volume de la chambre de dosage de la pompe diminue, ce qui provoque une augmentation de pression du produit fluide au sein de la chambre. Le clapet de sortie s'ouvre par déformation de la lèvre élastique et le produit est distribué.

Néanmoins, ces arts antérieurs n'offrent aucun enseignement pour réaliser la purge de la pompe lorsque de l'air a pénétré dans la chambre de dosage. Pour les systèmes de distribution dits « airless », de l'air est peut-être emprisonné dans le réservoir au moment où le système de distribution est fixé sur le réservoir rempli de produit. Pour les systèmes dits « atmosphériques » (c'est-à-dire avec de l'air dans le réservoir et un système de reprise d'air), l'extrémité du tube plongeur peut être situé hors du produit, si le flacon est incliné, au moment de l'actionnement de la pompe, et de l'air peut ainsi entrer dans la chambre de dosage via un clapet d'entrée de produit.

Dans une pompe de distribution classique, plusieurs actionnements de la pompe permettent de purger le système.

Avec une pompe à pré-compression, l'actionnement de la pompe et la diminution du volume de la chambre de dosage contenant de l'air conduira à une compression de l'air présent dans la chambre sans créer une surpression suffisante à l'ouverture du clapet de sortie, et l'air comprimé sera alors piégé à l'intérieur de la chambre de dosage. La pompe ne pourra alors pas s'amorcer.

### Résumé de l'invention

La présente invention a pour objectif de pallier l'inconvénient énoncé ci-dessus, au moyen d'un système de purge d'air, permettant d'évacuer l'air résiduel comprimé à l'intérieur de la chambre de dosage d'une pompe à pré-compression.

Ce but est atteint grâce à une pompe pour flacon destiné à contenir un produit cosmétique, ladite pompe comportant classiquement une chambre de dosage à volume variable défini au moins en partie par un élément déformable, la pompe fonctionnant en faisant varier le volume de la chambre par déformation élastique d'une membrane de l'élément déformable entre un état initial dans lequel la chambre a un volume maximal et un état déformé dans lequel le volume de la chambre est minimal, la chambre étant dotée d'un orifice d'entrée et d'un orifice de sortie du produit, la pompe comprenant un moyen de déformation de la membrane configuré pour exercer une pression sur la membrane.

Cette pompe comporte des moyens de purge d'air de la chambre activés lorsque la membrane est dans son état déformé, lesdits moyens de purge mettant en communication la chambre de dosage avec l'extérieur de la pompe.

La pompe comporte un clapet de sortie du produit, lesdits moyens de purge rompant l'étanchéité du clapet de sortie en fin d'actionnement de la pompe. Les moyens de purge agissent donc directement sur le fonctionnement du clapet de sortie du produit.

La pompe comprend une tige de guidage traversant l'élément déformable, l'élément déformable glissant le long de la tige lorsque la membrane subit ladite déformation, l'élément déformable comportant une lèvre de sortie délimitant ledit orifice de sortie et entourant un tronçon de la tige, ladite lèvre de sortie venant en appui étanche contre la tige ou s'écartant de la tige en fonction de la pression dans la chambre, ladite lèvre de sortie et la tige formant ledit clapet de sortie.

L'idée principale de cette invention consiste à prévoir un système de purge de l'air résiduel comprimé et emprisonné dans la chambre de dosage. Ce système n'est actif que lorsque la membrane est déformée au maximum, c'est-à-dire lorsque l'actionnement de la pompe est maximal et qu'un maximum de produit est déjà sorti de la chambre de dosage. Dans ce cas uniquement, le système de purge est activé. Le système de purge est neutralisé dans tous les autres cas, c'est-à-dire lorsque la membrane est au repos, ou lorsque la membrane est dans une forme transitoire, en passant d'un état à un autre.

Selon l'invention, l'air purgé est évacué via l'orifice de sortie du produit.

Dans les pompes à pré-compression de l'art antérieur, la chambre de dosage est mise en communication avec l'extérieur sans que le trajet d'évacuation de l'air ne rencontre le trajet de distribution du produit. La pression du fluide lors de sa distribution n'est donc pas affectée par la purge d'air. Cette pression diminue progressivement en fin de distribution sans s'annuler. Le résultat est qu'en fin de distribution, le fluide n'est plus distribué sous forme de spray (plus assez de pression) et on observe de grosses gouttes qui tombent de l'orifice de sortie.

Dans la présente invention, l'air purgé est évacué via le même chemin que celui emprunté par le produit au sein de la pompe. Il n'y a donc qu'un seul chemin, emprunté à la fois par le produit et par l'air purgé, à des moments différents. En mettant l'intérieur de la chambre de dosage en communication avec le circuit fluide de sortie (canal de sortie, buse...) en fin de distribution pour assurer la purge d'air, la surpression du fluide est stoppée brutalement, et la distribution cesse brutalement au lieu de finir en grosses gouttelettes. La qualité du spray en fin de distribution est ainsi améliorée.

Une « lèvre » correspond à une portion flexible, souvent légèrement amincie, d'une patte ou bien d'une jupe, ou de tout autre élément, qui a tendance à être plaquée contre une surface pour réaliser une étanchéité. La lèvre peut se déformer, et en particulier fléchir, de manière à s'écarter de ladite surface dans certaines conditions, par exemple lorsqu'il existe des différences de pression de part et d'autre de la lèvre, rompant ainsi l'étanchéité.

De façon avantageuse, lesdits moyens de purge consistent en au moins une saignée ou une nervure de décompression pratiquée dans la tige.

Par le terme « saignée », on comprend une gorge ou une fente creusée dans la tige. Le terme « nervure » est l'équivalent de la « saignée » en positif. La nervure est une partie saillante de la tige, c'est-à-dire une partie en relief.

Cette saignée ou nervure créée un espace qui a vocation à être emprunté par l'air et le produit fluide en même temps. Elle peut être de grande dimension et donc facile à réaliser lors de la fabrication de la tige par injection plastique. Dans l'art antérieur au contraire, il faut empêcher le produit fluide de circuler à travers les moyens de purge pour éviter une fuite de produit hors du corps de pompe. Par conséquent, les moyens de purge doivent être de petite dimension et sont donc compliqués à réaliser industriellement.

D'autre part, l'air à purger, en étant mélangé au fluide à distribuer, peut contribuer à déstabiliser encore l'écoulement par un effet « blow out », c'est-à-dire un échappement du produit et de l'air en même temps avec beaucoup d'énergie, pour améliorer la qualité du spray en fin de distribution.

Selon les différents modes de réalisation de l'invention, qui pourront être pris ensemble ou séparément :
chaque saignée ou nervure s'étend axialement le long de la tige.
   - chaque saignée ou nervure débouche dans la chambre de dosage. Cette saignée ou nervure est localisée pour faire communiquer la chambre de dosage avec l'extérieur de la pompe lorsque de la pompe est en butée basse (fin d'actionnement).
   - chaque saignée ou nervure s'étend le long d'un tronçon de la tige contre lequel la lèvre de sortie est en contact lorsque la membrane est dans son état déformé. La saignée s'étend donc le long de la partie basse de la tige.
   - chaque saignée s'étend sur une longueur axiale au moins supérieure à la longueur de la lèvre de sortie. Etant donné que toute la longueur de la lèvre est normalement plaquée contre la tige, il est nécessaire que la saignée ou nervure soit supérieure à la longueur de la lèvre, pour être sûr qu'un espace libre est créé sur toute la longueur de la lèvre pour le passage de l'air résiduel.
   - la membrane a une forme de dôme dans l'état initial et l'élément déformable comprend un fût disposé au sommet du dôme, la tige traversant le fût de sorte que le fût glisse le long de la tige lors de la déformation de la membrane, la lèvre de sortie étant agencée sur le fût, chaque saignée ou nervure s'étendant sur une longueur axiale supérieure à la longueur du fût.
   - chaque saignée ou nervure s'étend le long d'un tronçon de la tige situé en vis-à-vis du fût lorsque la membrane est dans son état déformé.
   - les moyens de purge consistent en deux saignées ou nervures de décompression pratiquées dans la tige en étant diamétralement opposées. Cette répartition permet d'équilibrer l'écoulement de l'air au sein de la pompe.

L'invention concerne également un flacon, notamment pour produit cosmétique, comprenant une pompe telle que décrite ci-dessus.

### Présentation des figures

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés.

Sur ces dessins :
- [Fig 1] la figure 1 est une vue en coupe et en perspective des éléments d'une pompe selon l'invention, avec une première forme de clapet d'entrée de produit,
- [Fig 2] la figure 2 est une vue en coupe conforme à la figure 1, dans laquelle la pompe est en position de repos,
- [Fig 3] la figure 3 est une vue en coupe illustrant un début d'actionnement de la pompe,
- [Fig 4] la figure 4 est une vue en coupe illustrant la pompe dans une position d'actionnement maximal,
- [Fig 5] la figure 5 est une vue agrandie d'une portion de la tige de guidage de la pompe selon la figure 4,
- [Fig 6] la figure 6 est une vue de la tige de guidage et de la membrane de la pompe selon la coupe A-A de la figure 4,
- [Fig 7] la figure 7 est une vue en coupe illustrant la pompe lorsqu'elle passe de sa position d'actionnement maximal à sa position de repos,
- [Fig 8] la figure 8 est une vue de la tige de guidage de la membrane de la pompe selon la coupe B-B de la figure 7,
- [Fig 9] la figure 9 est une vue en coupe illustrant la pompe de retour dans sa position de repos,
- [Fig 10] la figure 10 est une vue en coupe d'une pompe selon l'invention avec une seconde forme de clapet d'entrée de produit,
- [Fig 11] la figure 11 montre en coupe et en perspective un manchon de la pompe selon les figures 1 à 9.

### Description détaillée

Dans la suite de la description, des éléments présentant une structure identique ou des fonctions analogues sont désignés par les mêmes références.

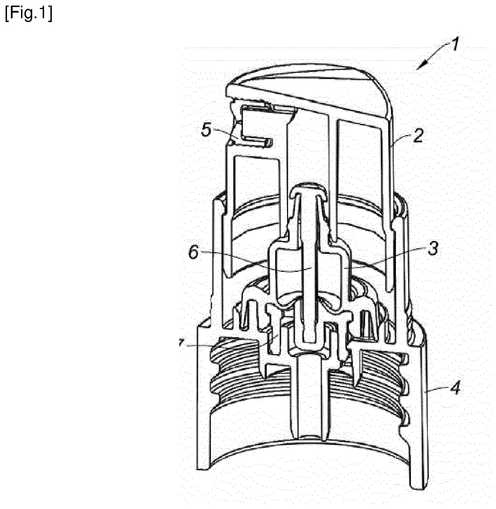

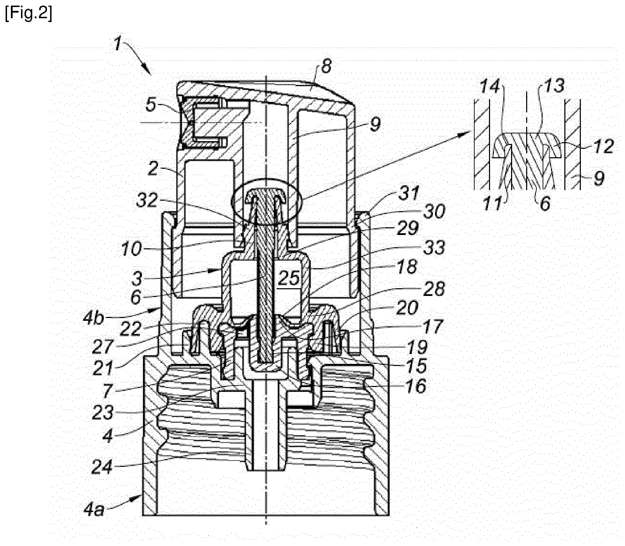

L'invention concerne une pompe 1 pour un flacon comprenant un réservoir (non illustré) destiné à contenir un produit cosmétique. Comme illustré sur les figures 1 et 2, la pompe 1 comprend un bouton-poussoir 2, un élément déformable 3 et un manchon 4 faisant office de frette.

Le bouton-poussoir 2 a pour fonction de permettre l'actionnement de la pompe 1 par un utilisateur. Le bouton-poussoir 2 a ici un corps cylindrique muni d'une ouverture de distribution du produit dans laquelle se trouve une buse 5, et d'une paroi supérieure d'appui 8 sur laquelle l'utilisateur exerce une pression pour actionner la pompe 1, le bouton-poussoir 2 s'insérant dans le manchon 4 pendant l'actionnement. Tout autre modèle de bouton-poussoir 2 pourrait être utilisé.

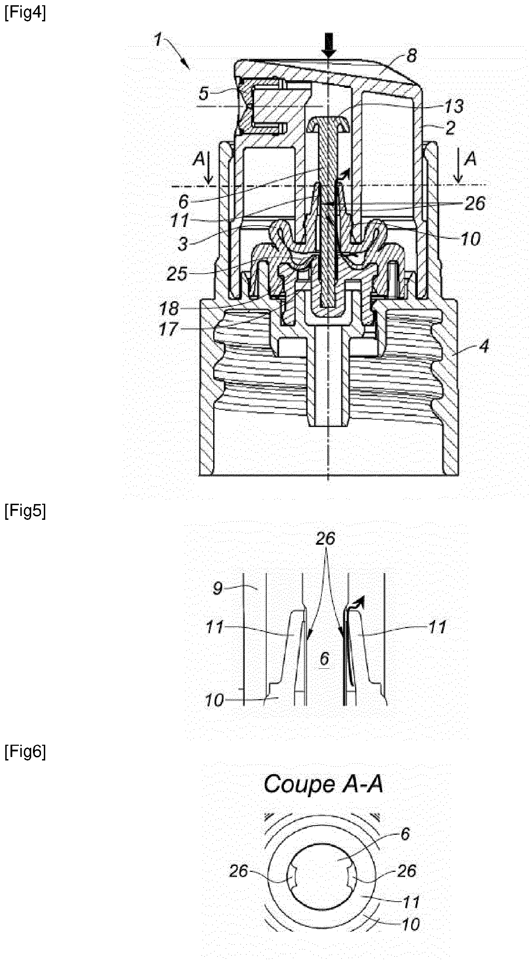

La pompe 1 comporte en outre une chambre de dosage 25 à volume variable défini au moins en partie par l'élément déformable 3. La pompe 1 fonctionne en faisant varier le volume de la chambre 25 par déformation élastique d'une membrane 33 de l'élément déformable 3 entre un état initial représenté sur la figure 2 dans lequel la chambre 25 a un volume maximal et un état déformé représenté sur la figure 4 dans lequel le volume de la chambre 25 est minimal.

La chambre 25 a une forme présentant un axe longitudinal à l'état initial. La membrane 33 a ici une forme de dôme arrondi comprenant une base 28 circulaire et un sommet 29. L'élément déformable 3 a en outre un fût 10 surmontant le dôme. Le volume intérieur du dôme et du fût 10 définissent la chambre de dosage 25. L'axe longitudinal de la chambre 25 passe sensiblement par le centre de la base 28, par le sommet 29 du dôme, et par le fût 10.

L'élément déformable 3 est ici formé d'une seule matière élastique, de préférence un matériau polymère, par exemple en élastomère thermoplastique (TPE). Elle comporte des zones plus ou moins flexibles selon leurs épaisseurs.

Le manchon 4 se compose principalement d'une frette supérieure 4b, d'une frette inférieure 4a, et d'un support 23 sur lequel vient se positionner la membrane 3. Dans le mode de réalisation présenté ici, une pièce intermédiaire 7 est fixée entre l'élément déformable 3 et le support 23 du manchon 4. Cette pièce intermédiaire 7 est encliquetée à la fois dans le support 23 et dans l'élément déformable 3. Plus précisément, la base 28 de l'élément déformable 3 est pourvue d'un rebord interne 19 apte à venir s'encliqueter sous un premier rebord externe de la pièce intermédiaire 7. De la même manière, le support 23 est pourvu d'un rebord interne apte à venir s'encliqueter sous un second rebord externe de la pièce intermédiaire 7. Tout autre type de solidarisation peut être envisagé. Il est à noter que le support 23 et la pièce intermédiaire 7 pourraient ne constituer qu'une seule et unique pièce.

La frette supérieure 4b sert de moyen de guidage du bouton-poussoir 2, et s'étend depuis ce support 23. En effet, le corps cylindrique du bouton-poussoir 2 coulisse à l'intérieur du manchon 4 et en particulier contre la paroi périphérique de la frette supérieure 4b. Par mesure de sûreté, pour éviter toute sortie du bouton-poussoir 2 par rapport au manchon 4, le corps cylindrique du bouton-poussoir 2 est pourvu d'un épaulement circonférentiel 30 apte à venir en butée contre un rebord interne 31 localisé à l'extrémité libre de la paroi périphérique de la frette supérieure 4b du manchon 4.

Depuis le support 23 du manchon 4 s'étend également une frette inférieure 4a dirigée vers le réservoir. La surface intérieure de la paroi périphérique de la frette inférieure 4a comprend un filetage par exemple afin de pouvoir être vissé sur le col d'un réservoir. On pourrait également envisager un encliquetage du manchon 4 sur le col du réservoir. Tout autre type de solidarisation peut être envisagé.

La pièce intermédiaire 7 présente une paroi 17 sur laquelle l'élément déformable 3 repose au moins en partie. En particulier, l'élément déformable 3 comporte une lèvre d'entrée 18 au voisinage de la base 28 qui repose sur la paroi 17. Cette paroi 17 comporte au moins un trou 27 traversant qui permet le passage du produit depuis le réservoir vers la chambre de dosage 25. Ce trou 27 est recouvert par la lèvre d'entrée 18 de l'élément déformable 3 lorsque ce dernier est monté sur la pièce intermédiaire 7.

Cette lèvre d'entrée 18 est flexible et présente une épaisseur amincie par rapport à la base 28, afin de présenter plus de souplesse. Ainsi, la lèvre d'entrée 18 peut se soulever pour laisser le produit entrer dans la chambre 25.

Dans l'exemple présenté aux figures 1 à 9, la paroi 17 est orientée obliquement vers l'intérieur du manchon 4, donc a fortiori vers l'intérieur de l'élément déformable 3, et forme un tronc de cône à proximité de la tige. La lèvre d'entrée 18 repose sur le tronc de cône, et remonte ainsi à l'intérieur de la chambre de dosage 25.

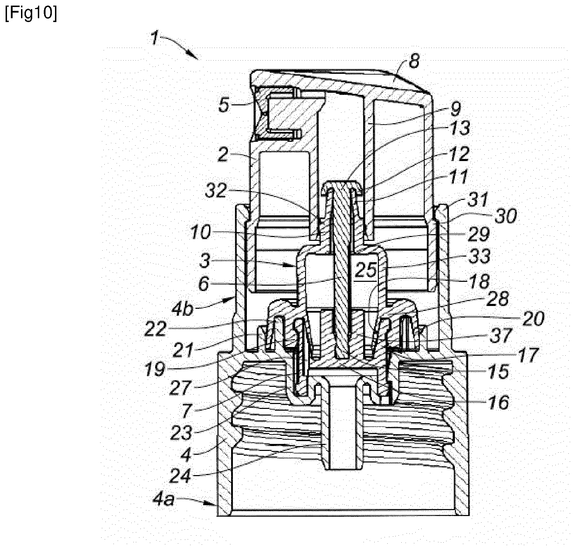

Cependant, il est tout à fait envisageable que la paroi 17 soit plane, ou soit orientée différemment, comme cela est par exemple le cas sur la figure 10. Sur cette figure 10, la paroi 17 est inclinée et forme un puits en forme de U, limité près de l'axe de la pompe par une paroi 37 localisée à proximité de la tige, à l'inverse du tronc de cône. Le trou d'entrée 27 est localisé sur une face périphérique intérieure dudit puits. La lèvre d'entrée 18 recouvre donc cette paroi 17 inclinée, et recouvre le trou 27 d'entrée du produit vers la chambre de dosage 25. La présence de ce puits permet d'augmenter le volume de la chambre de dosage 25 et par conséquent le volume de la dose distribuée.

Le support 23 du manchon 4 présente une cheminée 24 centrale à l'intérieur ou à l'extérieur de laquelle peut être inséré un tube d'aspiration de produit plongé à l'intérieur du réservoir. Le produit passe donc à l'intérieur de ce tube puis arrive dans un espace créé entre la pièce intermédiaire 7 et le support 23, puis poursuit son chemin jusqu'à arriver au niveau du trou 27 pratiqué dans la paroi 17 de la pièce intermédiaire 7. Lorsque la lèvre d'entrée 18 se soulève, comme nous le verrons dans la suite de la description, le produit peut ainsi rentrer à l'intérieur de la chambre de dosage 25.

La paroi 17 et la lèvre d'entrée 18 forment ce que l'on appelle un clapet d'entrée du produit. La paroi support 17 fait office de siège, et la lèvre d'entrée 18 consiste en une lèvre d'admission déformable apte à être plaquée ou non sur le siège en fonction de la pression présente à l'intérieur de la chambre de dosage 25. Lorsque la lèvre d'entrée 18 est plaquée sur la paroi 17, la chambre de dosage 25 est étanche par rapport au réservoir contenant le produit.

Selon l'invention, le manchon 4 est pourvu d'une tige 6 de guidage de l'élément déformable 3, qui s'étend depuis la pièce intermédiaire 7. La tige 6 et la pièce intermédiaire 7 peuvent consister en deux pièces différentes, ou en une seule et unique pièce. Dans le mode de réalisation présenté, la tige 6 et la pièce intermédiaire 7 sont deux pièces différentes. Une première extrémité 15 de la tige 6 est emmanchée dans une douille centrale 16 de la pièce intermédiaire 7.

Dans le mode de réalisation représenté, la frette supérieure 4b, la frette inférieure 4a, le support 23 et la cheminée 24 forment une seule pièce appelée manchon 4. La tige 6 et la pièce intermédiaire 7 pourraient également faire partie de ce manchon 4 en une seule pièce. Inversement, il pourrait s'agir d'un assemblage de plusieurs pièces pour former le manchon 4.

La tige 6 est disposée sensiblement selon l'axe longitudinal de l'élément déformable 3, qui est coaxial avec l'axe central du manchon 4 ainsi que l'axe central du bouton-poussoir 2. Cette tige 6 de guidage traverse l'élément déformable 3, de sorte que ce dernier glisse le long de la tige 6 lorsqu'il subit une déformation, la tige 6 traversant la chambre 25 sensiblement selon l'axe longitudinal de la chambre 25. Une seconde extrémité de la tige 6 est localisée au niveau de l'extrémité du fût 10 de l'élément déformable 3. En effet, le sommet 29 du dôme et le fût 10 forment un canal traversant qui permet à la tige 6 de passer à travers ce canal et donc à travers l'élément déformable 3. L'extrémité supérieure du fût 10 comporte une partie amincie formant une lèvre de sortie 11 flexible délimitant un orifice de sortie pour le fluide contenu dans la chambre de dosage 25. Cette lèvre d'échappement 11 entoure un tronçon de la tige 6 et est plaquée contre la tige 6.

Cette tige 6 a pour fonction de guider la membrane 33 lorsqu'elle passe de l'état initial à l'état déformé, puis de l'état déformé à l'état initial. La membrane 33 est ainsi configurée pour pouvoir replier son sommet 29 vers sa base 28, le fût 10 de l'élément déformable 3 se déplaçant également vers la base 28 le long de la tige 6. Grâce à la tige 6, la membrane 33 reste centrée autour de l'axe longitudinal du manchon 4. On évite ainsi le risque d'un repliement mal contrôlé de la membrane 33.

La lèvre de sortie 11 et la tige 6 forment ce que l'on appelle un clapet de sortie du produit fluide. Le siège de ce clapet est constitué par le corps de la tige 6 sur lequel vient se plaquer la lèvre de sortie 11. Lorsqu'une augmentation de pression se produit au sein de la chambre de dosage 25, le clapet de sortie s'ouvre par déformation élastique de la lèvre de sortie 11 et le produit peut ainsi s'échapper de la chambre de dosage 25 pour arriver jusqu'à la buse 5 afin d'être distribué. Plus précisément, la déformation de la lèvre de sortie 11 induit la création de quelques espaces entre la tige 6 et la lèvre 11 à travers lesquels le produit fluide peut passer et donc s'échapper de la chambre de dosage 25.

Lorsqu'une dépression a lieu tout autour de la pompe 1, par exemple lorsqu'elle se retrouve en montagne ou dans une soute d'avion, la différence de pression entre l'extérieur et l'intérieur de la chambre de dosage 25 augmente et fait qu'il y a un phénomène de surpression qui se crée au final, ce qui provoque la déformation de la lèvre de sortie 11 et donc un écoulement de produit via le clapet de sortie, alors que cela n'est pas désiré par l'utilisateur. Ce phénomène de surpression au sein de la pompe peut également avoir lieu lorsque le distributeur est laissé au soleil.

Pour éviter toute déformation de la lèvre de sortie 11 lorsque la pompe 1 est en position de repos, c'est-à-dire lorsque le volume de la chambre 25 est maximal, la tige 6 est pourvue de moyens de maintien de la lèvre de sortie 11. Ces moyens de maintien consistent en un rebord de pincement 12 de la lèvre de sortie 11, s'étendant depuis la seconde extrémité de la tige 6. Plus particulièrement, cette seconde extrémité de la tige 6 est dotée d'une tête de tige 13 de laquelle s'étend un rebord de pincement 12 recourbé en direction de la première extrémité 15 de la tige 6, de manière à créer une gorge 28 annulaire entre le corps de tige 6 et le rebord de pincement 12. La lèvre de sortie 11 de l'élément déformable 3 peut alors venir s'insérer à l'intérieur de cette gorge 28 annulaire. Lorsque la chambre de dosage 25 a un volume maximal, la membrane 33 est déployée au maximum et la lèvre de sortie 11 est insérée en force dans la gorge 28. Le rebord de pincement 12 est incliné ou recourbé de manière à venir exercer un effort de placage de la lèvre de sortie 11 contre le corps de la tige 6. Plus précisément, la surface intérieure du rebord de pincement 12 vient au contact de la surface extérieure de la lèvre de sortie 11 pour presser cette dernière contre le corps de tige 6. De cette manière, même en cas de dépression à l'extérieur du flacon, la lèvre de sortie 11 ne pourra pas être déformée car elle est complètement enserrée et maintenue à l'intérieur de la gorge 28 grâce au rebord de pincement 12.

Ce rebord de pincement 12 s'étend sur toute la circonférence de la tige 6 de manière à enserrer l'intégralité de la lèvre de sortie 11.

De préférence, l'épaisseur de la lèvre de sortie 11 est plus grande que la largeur de la gorge 28, ainsi la lèvre de sortie 11 est insérée en force sans atteindre le fond 14 de la gorge 28. Cela permet d'assurer une bonne étanchéité.

Pour déformer l'élément déformable 3, la pompe 1 comprend un moyen de déformation disposé à l'extérieur de la chambre 25 et configuré pour exercer une pression sur la membrane 33 lorsque le bouton-poussoir 2 est actionné. Ce moyen de déformation est un conduit de distribution 9 ayant une extrémité ouverte en contact avec la membrane 33. Le conduit de distribution 9 fait ici partie du bouton-poussoir 2, le conduit 9 s'étendant à l'intérieur du bouton-poussoir 2 depuis la face interne de la paroi supérieure 8. Le conduit de distribution 9 a pour fonction d'amener le produit sortant de la chambre de dosage 25 jusqu'à l'ouverture et la buse 5 du bouton-poussoir 2. Le conduit de distribution 9 est en contact étanche avec l'élément déformable 3. Pour cela, le fût 10 est inséré dans le conduit de distribution 9, le conduit 9 reposant sur la membrane 33. Le fût 10 est en outre muni d'un bourrelet externe 32 qui permet d'une part de le bloquer dans le conduit 9 et d'autre part d'assurer l'étanchéité au contact avec le conduit de distribution 9. Le bourrelet 32 fait le tour du fût 10, ici à la jonction avec la membrane 33, et est dimensionné sensiblement aux dimensions de l'extrémité ouverte du conduit de distribution 9.

Nous allons décrire ci-après le fonctionnement de la pompe 1.

Sur la figure 2, la pompe 1 est en position de repos. Dans cette position, la pompe 1 est étanche. En effet, la réaction élastique de la membrane 33 précontrainte tend à pousser la lèvre de sortie 11 vers le haut et la coincer sous la tête de tige 6, c'est-à-dire sous le rebord de pincement 12. Cette lèvre de sortie 11 se trouve ainsi pincée dans la tête de tige 6. Le clapet de sortie de produit est ainsi fermé et étanche. La chambre de dosage 25 a un volume maximal. L'épaulement circonférentiel 30 du bouton-poussoir 2 est en butée contre le rebord interne 31 de la paroi périphérique de la frette supérieure 4b du manchon 4. La lèvre d'entrée 18 de l'élément déformable 3 repose de manière étanche sur la paroi 17 de la pièce intermédiaire 7. Le clapet d'entrée de produit est ainsi fermé.

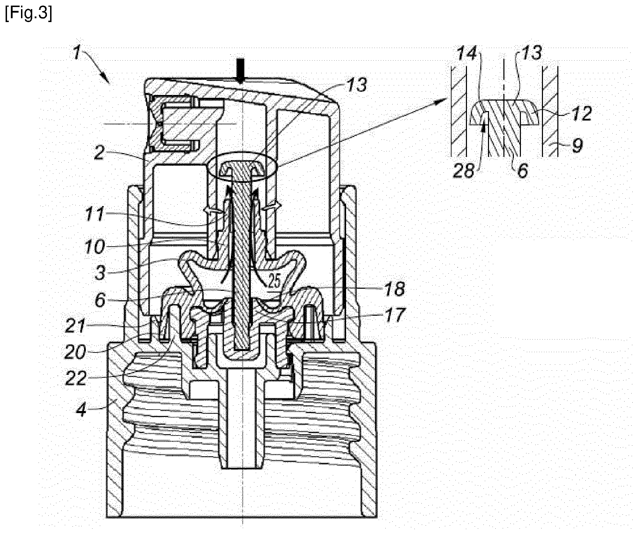

Sur la figure 3, un utilisateur appuie sur le bouton-poussoir 2. Le bouton-poussoir 2 coulisse alors à l'intérieur du manchon 4 et se dirige vers le support 23 du manchon 4. Dans sa course, le bouton-poussoir 2 entraîne la descente du fût 10 de l'élément déformable 3 en direction du support 23. La lèvre de sortie 11 glisse le long de la tige 6 et est mise à distance de la tête de tige 13. La lèvre de sortie 11 n'est donc plus en prise avec le rebord de pincement 12. Le conduit de distribution 9 du bouton-poussoir 2 appuie en parallèle sur la membrane 33 de manière à la déformer en la repliant vers l'intérieur. Le haut du dôme de la membrane 33 s'aplatit ainsi. Le volume de la chambre de dosage 25 commence ainsi à diminuer et la pression augmente dans la chambre de dosage 25. Cette surpression dans la chambre de dosage 25 entraîne la déformation de la lèvre de sortie 11, qui s'écarte de la tige 6 au-delà d'une contrainte seuil, ce qui est représenté par des petites flèches. Le produit sous pression dans la chambre de dosage 25 s'échappe ainsi via le clapet de sortie et pénètre dans le conduit de distribution 9 du bouton-poussoir 2 jusqu'à arriver à la buse 5 de distribution, ce qui est représenté par des grandes flèches. La diffusion du produit est ainsi conditionnée à un minima de pression pour arriver à la buse 5.

En fin de course, comme illustré en figure 4, le corps cylindrique du bouton-poussoir 2 arrive en butée contre le support 23 du manchon 4, tandis que le conduit de distribution 9 a déformé la membrane 33 au maximum, et le volume de la chambre de dosage 25 est minimal. Un maximum de produit contenu dans la chambre 25 est sorti via le clapet de sortie. Puisqu'il n'y a plus de pression dans la chambre de dosage 25, la lèvre de sortie 11 est à nouveau plaquée contre le corps de tige 6.

Il est possible que de l'air résiduel soit contenu dans la chambre de dosage 25. Cet air peut avoir été emprisonné dans le réservoir au moment où le système de distribution est fixé sur le réservoir rempli de produit s'il s'agit d'une pompe airless, c'est-à-dire sans reprise d'air, ou cet air peut provenir d'un système de reprise d'air s'il s'agit d'une pompe atmosphérique, c'est-à-dire avec de l'air dans le réservoir, ou cet air peut être présent dans le tube d'aspiration avant une première utilisation.

Dans cette position basse telle qu'illustrée en figure 4, l'air résiduel est comprimé dans la chambre de dosage 25 mais sans créer une surpression suffisante à l'ouverture du clapet de sortie pour faire sortir cet air résiduel. Un système de purge a donc été prévu sous la forme d'au moins une saignée 26 axiale de décompression qui s'étend le long d'un tronçon de la tige 6. En l'espèce, il s'agit du tronçon contre lequel la lèvre de sortie 11 est en contact lorsque la membrane 33 est comprimée au maximum et que le bouton-poussoir 2 est en butée contre le support 23 du manchon 4. Dans l'exemple présenté, il y a deux saignées 26 axiales diamétralement opposées, comme cela est illustré en particulier sur les figures 5 et 6. Au niveau de ces saignées 26 axiales, la lèvre de sortie 11 n'est alors pas en contact avec le corps de tige 6, en l'espèce avec le fond de la saignée 26, et un petit espace est créé entre la lèvre de sortie 11 et le fond de la saignée 26, espace à travers lequel l'air résiduel de la chambre de dosage 25 peut s'échapper.

Ces saignées 26 axiales peuvent être remplacées par des nervures axiales. Dans ce cas, la lèvre de sortie 11 est mise à distance du corps de tige lorsqu'elle passe au-dessus d'une nervure. Un espace est alors créé entre la lèvre de sortie 11 et le corps de tige à droite et à gauche de la nervure.

Une seule saignée 26 de décompression est suffisante pour permettre l'échappement de l'air. Il est également possible d'envisager deux, trois, quatre, ou n saignées 26.

Chaque saignée 26 axiale s'étend sur une longueur axiale au moins supérieure à la longueur de la lèvre de sortie 11 du clapet de sortie, afin que l'air puisse pénétrer dans la saignée 26. Il est également indispensable que ces saignées 26 débouchent directement dans la chambre de dosage 25 au niveau du fût 10 de l'élément déformable 3. Il est à noter que le fût 10 de l'élément déformable 3, hors lèvre de sortie 11, présente un diamètre intérieur supérieur au diamètre extérieur de la tige 6. De préférence, chaque saignée 26 axiale s'étend sur une longueur axiale correspondant à la longueur totale du fût 10 de l'élément déformable 3.

Lorsque la pompe 1 est en position d'activation maximale, la lèvre de sortie11 du clapet de sortie se trouve autour des saignées 26 de décompression de la tige 6. Il y a ainsi rupture d'étanchéité et chute de pression dans la chambre de dosage 25, donc l'air s'échappe, comme cela est illustré par la flèche. Cela peut se produire également dans la phase d'amorçage de la pompe 1.

En position d'activation maximale, la chambre de dosage 25, initialement en surpression, se trouve en communication avec l'atmosphère. La pression dans la chambre de dosage 25 chute, ce qui a pour effet de stopper immédiatement la fin de distribution de produit. On évite ainsi des fins de distribution comprenant de grosses gouttes, fournies par les systèmes de distribution classique.

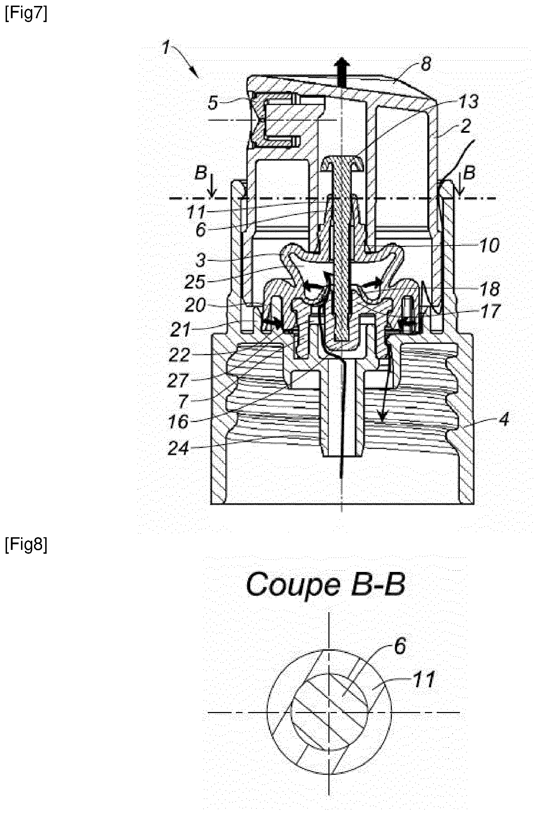

Sur la figure 7, l'utilisateur relâche la pression exercée sur le bouton-poussoir 2, et ce dernier commence alors sa remontée vers sa position de repos, grâce à la réaction élastique de la membrane 33. La lèvre de sortie 11 est également poussée par la membrane 33 en direction de la tête de tige 6. Cette petite course de la lèvre de sortie 11, entre une position basse dans un tronçon de la tige 6 avec des saignées 26 de décompression et une position intermédiaire dans un tronçon de la tige 6 lisse et rond sans saignée, permet une légère succion en sortie de buse 5 et d'éviter une goutte de se former au niveau de la sortie de la buse 5.

Cette remontée de la membrane 33 et du fût 10 entraîne l'augmentation du volume de la chambre de dosage 25, ce qui provoque une dépression interne au sein de la chambre de dosage 25. Cette dépression, associée à la poussée du produit depuis le réservoir, provoque l'ouverture du clapet d'entrée du produit. En l'espèce, la lèvre d'entrée 18 s'éloigne de la paroi 17 (comme illustré par des petites flèches), et le produit peut ainsi passer du réservoir vers la chambre de dosage 25 à travers le trou 27 de la pièce intermédiaire 7 (comme illustré par une grande flèche). Cette aspiration du produit se poursuit jusqu'à ce que la lèvre de sortie 11 arrive en butée au fond 14 de la gorge 28 de la tête de tige 6. La lèvre de sortie 11 est ainsi à nouveau en position initiale et enserrée autour de la tige 6 grâce au rebord de pincement 12. Sur la figure 8, il est bien visible que la lèvre de sortie 11 est en contact étanche avec la tige 6. Le clapet de sortie de produit est ainsi bien fermé lors de la remontée du bouton-poussoir 2.

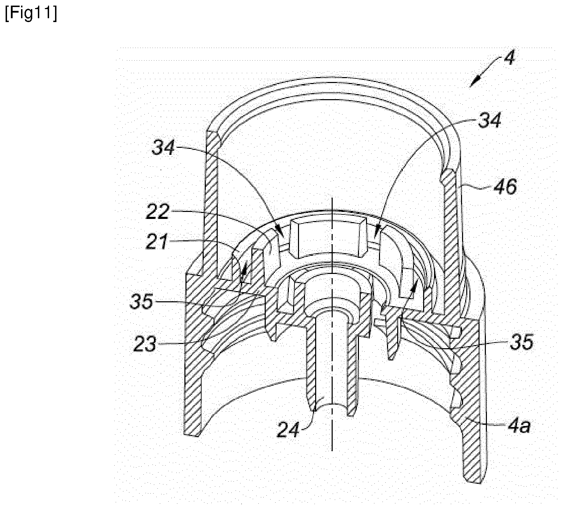

L'élément déformable 3 est doté d'une lèvre de reprise d'air 20 localisée au voisinage de la base 28, et qui coopère avec le support 23 du manchon 4. Plus particulièrement, le support 23 comprend un anneau extérieur 21 et un anneau intérieur 22, qui encerclent la pièce intermédiaire 7, comme cela est illustré en figure 11. L'anneau intérieur 22 est discontinu de manière à former des passages 34. Un interstice 35 annulaire est formé entre les deux anneaux 21 ,22. La lèvre de reprise d'air 20 de l'élément déformable 3 se loge dans cet interstice 35 et est apte à venir se plaquer contre la surface intérieure de l'anneau extérieur 21, de manière à former un clapet de reprise d'air, l'anneau extérieur 21 formant alors un siège contre lequel la lèvre de reprise d'air 20 se plaque de manière étanche. Cette lèvre 20 est amincie et est donc flexible. Le placage de la lèvre de reprise d'air 20 contre l'anneau extérieur 21 permet de réaliser une étanchéité à l'air entre l'extérieur du réservoir et l'intérieur du réservoir.

Lors de la remontée du bouton-poussoir 2, l'admission de produit au sein de la chambre de dosage 25 entraîne une dépression au sein du réservoir contenant le produit, ce qui provoque une aspiration d'air permise via ce clapet de reprise d'air. En particulier, l'aspiration d'air va avoir tendance à écarter la lèvre de reprise d'air 20 par rapport à l'anneau extérieur 21 et à la rapprocher de l'anneau intérieur 22 (comme illustré par des petites flèches). L'étanchéité est ainsi rompue, et de l'air peut passer entre la lèvre de reprise d'air 20 et l'anneau extérieur 21, puis dans les passages 34 de l'anneau intérieur 22, puis entre la pièce intermédiaire 7 et le support du manchon 4 jusqu'à arriver au sein du réservoir. L'air provient initialement de l'extérieur du flacon et passe entre le bouton-poussoir 2 et le manchon 4 avant d'arriver au niveau du clapet de reprise d'air. Ce cheminement est illustré par une grande flèche sur la figure 7.

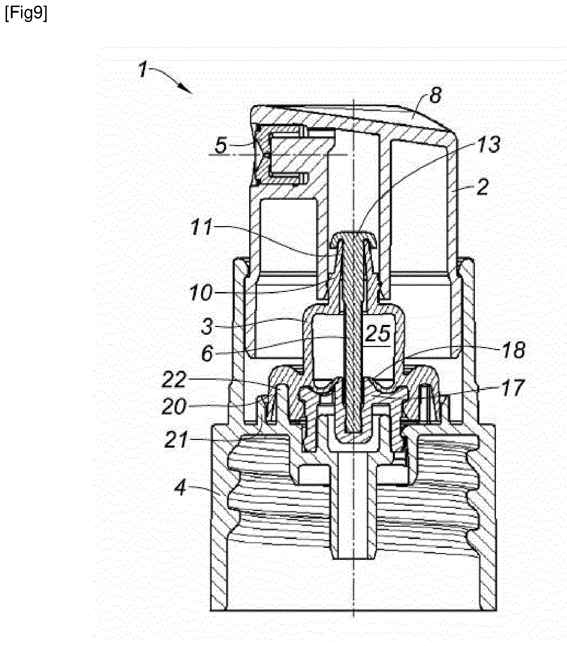

Sur la figure 9, la pompe 1 est revenue dans son état de repos initial, comme sur la figure 2. La réaction élastique de la membrane 33 précontrainte tend à pousser la lèvre de sortie 11 vers le haut et à la coincer sous la tête de tige 6. Celle-ci se retrouve ainsi pincée dans la tête de tige 6. La dépression s'étant arrêtée à l'intérieur de la chambre de dosage 25, le clapet d'entrée de produit est fermé, car la lèvre d'entrée 18 s'est replaquée sur le trou 27 de la pièce intermédiaire 7, de par l'élasticité intrinsèque du matériau TPE de l'élément déformable 3.

La lèvre de reprise d'air 20 revient en place contre l'anneau extérieur 21. Le clapet de reprise d'air est ainsi fermé et le réservoir est étanche à l'air. La chambre de dosage 25 contient une nouvelle dose de produit prête à être délivrée.

La lèvre d'entrée, la lèvre de sortie, et la lèvre de reprise d'air ont toutes une forme de collerette puisqu'elles s'étendent de façon périphérique dans l'élément déformable qui est une pièce de révolution.

Les configurations montrées aux figures citées ne sont que des exemples possibles, nullement limitatifs, de l'invention qui englobe au contraire les variantes de formes et de conceptions à la portée de l'homme de l'art.

## Revendications

1. Pompe (1) pour flacon destiné à contenir un produit cosmétique, ladite pompe (1) comportant une chambre de dosage (25) à volume variable défini au moins en partie par un élément déformable (3), la pompe (1) fonctionnant en faisant varier le volume de la chambre (25) par déformation élastique d'une membrane (33) de l'élément déformable (3) entre un état initial dans lequel la chambre (25) a un volume maximal et un état déformé dans lequel le volume de la chambre (25) est minimal, la chambre (25) étant dotée d'un orifice d'entrée et d'un orifice de sortie du produit, la pompe (1) comprenant un moyen de déformation (9) de la membrane (33) configuré pour exercer une pression sur la membrane (33), ladite pompe comportant des moyens de purge d'air de la chambre (25) activés lorsque la membrane (33) est dans son état déformé, lesdits moyens de purge mettant en communication la chambre de dosage (25) avec l'extérieur de la pompe (1), **caractérisée en ce que** la pompe comporte un clapet de sortie du produit, lesdits moyens de purge rompant l'étanchéité du clapet de sortie en fin d'actionnement de la pompe (1), et **en ce qu'**elle comprend une tige (6) de guidage traversant l'élément déformable (3), l'élément déformable (3) glissant le long de la tige (6) lorsque la membrane (33) subit ladite déformation, l'élément déformable (3) comportant une lèvre de sortie (11) délimitant ledit orifice de sortie et entourant un tronçon de la tige (6), ladite lèvre de sortie (11) venant en appui étanche contre la tige (6) ou s'écartant de la tige (6) en fonction de la pression dans la chambre (25), ladite lèvre de sortie (11) et la tige (6) formant ledit clapet de sortie.

2. Pompe (1) selon la revendication 1, **caractérisée en ce que** l'air purgé est évacué via l'orifice de sortie du produit.

3. Pompe (1) selon la revendication précédente, **caractérisée en ce que** lesdits moyens de purge consistent en au moins une saignée (26) ou nervure de décompression pratiquée dans la tige (6).

4. Pompe (1) selon la revendication précédente, **caractérisée en ce que** chaque saignée (26) ou nervure s'étend axialement le long de la tige (6).

5. Pompe (1) selon l'une des revendications 3 à 4, **caractérisée en ce que** chaque saignée (26) ou nervure débouche dans la chambre de dosage (25).

6. Pompe (1) selon l'une des revendications 3 à 5, **caractérisée en ce que** chaque saignée (26) ou nervure s'étend le long d'un tronçon de la tige (6) contre lequel la lèvre de sortie (11) est en contact lorsque la membrane (33) est dans son état déformé.

7. Pompe (1) selon l'une des revendications 3 à 6, **caractérisée en ce que** chaque saignée (26) ou nervure s'étend sur une longueur axiale au moins supérieure à la longueur de la lèvre de sortie (11).

8. Pompe (1) selon l'une des revendications 3 à 7, **caractérisée en ce que** la membrane (33) a une forme de dôme (30) dans l'état initial et l'élément déformable (3) comprend un fût (10) disposé au sommet (29) du dôme (30), la tige (6) traversant le fût (10) de sorte que le fût (10) glisse le long de la tige (6) lors de la déformation de la membrane (33), la lèvre de sortie (11) étant agencée sur le fût (10), chaque saignée (26) ou nervure s'étendant sur une longueur axiale supérieure à la longueur du fût (10).

9. Pompe (1) selon la revendication précédente, **caractérisée en ce que** chaque saignée (26) ou nervure s'étend le long d'un tronçon de la tige (6) situé en vis-à-vis du fût lorsque la membrane (33) est dans son état déformé.

10. Pompe (1) selon l'une des revendications 3 à 9, **caractérisée en ce que** les moyens de purge consistent en deux saignées (26) ou nervures de décompression pratiquées dans la tige (6) en étant diamétralement opposées.

11. Flacon, notamment pour produit cosmétique, comprenant une pompe (1) selon l'une quelconque des revendications précédentes.

## Patentansprüche

1. Pumpe (1) für Flakon, der dazu bestimmt ist, ein Kosmetikprodukt zu enthalten, wobei die Pumpe (1) eine Dosierkammer (25) mit variablem Volumen beinhaltet, das mindestens teilweise durch ein verformbares Element (3) definiert wird, wobei die Pumpe (1) arbeitet, indem sie das Volumen der Kammer (25) durch elastisches Verformen einer Membran (33) des verformbaren Elements (3) zwischen einem ursprünglichen Zustand, in dem die Kammer (25) ein maximales Volumen aufweist, und einem verformten Zustand, in dem das Volumen der Kammer (25) minimal ist, variieren lässt, wobei die Kammer (25) mit einer Eingangsöffnung und einer Ausgangsöffnung des Produkts versehen ist, wobei die Pumpe (1) ein Mittel zum Verformen (9) der Membran (33) umfasst, das konfiguriert ist, um einen Druck auf die Membran (33) auszuüben, wobei die Pumpe Luftablassmittel aus der Kammer (25) beinhaltet, die aktiviert werden, wenn die Membran (33) in ihrem verformten Zustand ist, wobei die Ablassmittel die Dosierkammer (25) mit dem Äußeren der Pumpe (1) in Verbindung bringen, **dadurch gekennzeichnet, dass** die Pumpe eine Ausgangsklappe für das Produkt beinhaltet, wobei die Ablassmittel die Dichtheit der Ausgangsklappe am Ende der Betätigung der Pumpe (1) brechen, und dadurch, dass sie einen Führungsstift (6) umfasst, der das verformbare Element (3) durchquert, wobei das verformbare Element (3) entlang des Stifts (6) gleitet, wenn die Membran (33) die Verformung erfährt, wobei das verformbare Element (3) eine Ausgangslippe (11) beinhaltet, die die Ausgangsöffnung begrenzt und einen Abschnitt des Stifts (6) umgibt, wobei sich die Ausgangslippe (11) je nach Druck in der Kammer (25) dicht an dem Stift (6) anlegt, oder sich von dem Stift (6) entfernt, wobei die Ausgangslippe (11) und der Stift (6) die Ausgangsklappe bilden.

2. Pumpe (1) nach Anspruch 1, **dadurch gekennzeichnet, dass** die abgelassene Luft über die Ausgangsöffnung für das Produkt ausgebracht wird.

3. Pumpe (1) nach dem vorstehenden Anspruch, **dadurch gekennzeichnet, dass** die Ablassmittel aus mindestens einem Schlitz (26) oder einer Druckentlastungsrippe bestehen, die in den Stift (6) eingearbeitet ist.

4. Pumpe (1) nach dem vorstehenden Anspruch, **dadurch gekennzeichnet, dass** sich jeder Schlitz (26) oder jede Rippe axial entlang des Stiftes (6) erstreckt.

5. Pumpe (1) nach einem der Ansprüche 3 bis 4, **dadurch gekennzeichnet, dass** jeder Schlitz (26) oder jede Rippe in die Dosierkammer (25) mündet.

6. Pumpe (1) nach einem der Ansprüche 3 bis 5, **dadurch gekennzeichnet, dass** sich jeder Schlitz (26) oder jede Rippe entlang eines Abschnitt des Stiftes (6) erstreckt, an dem die Ausgangslippe (11) anliegt, wenn die Membran (33) in ihrem verformten Zustand ist.

7. Pumpe (1) nach einem der Ansprüche 3 bis 6, **dadurch gekennzeichnet, dass** sich jeder Schlitz (26) oder jede Rippe über eine axiale Länge mindestens größer als die Länge der Ausgangslippe (11) erstreckt.

8. Pumpe (1) nach einem der Ansprüche 3 bis 7, **dadurch gekennzeichnet, dass** die Membran (33) eine Kuppelform (30) im ursprünglichen Zustand aufweist, und das verformbare Element (3) einen Schaft (10) umfasst, der am Scheitel (29) der Kuppel (30) angeordnet ist, wobei der Stift (6) den Schaft (10) derart durchquert, dass der Schaft (10) bei der Verformung der Membran (33) entlang des Stifts (6) gleitet, wobei die Ausgangslippe (11) an dem Schaft (10) angeordnet ist, wobei sich jeder Schlitz (26) oder jede Rippe über eine axiale Länge größer als die Länge des Schafts (10) erstreckt.

9. Pumpe (1) nach dem vorstehenden Anspruch, **dadurch gekennzeichnet, dass** sich jeder Schlitz (26) oder jede Rippe entlang eines Abschnitts des Stifts (6) erstreckt, der sich gegenüber dem Schaft befindet, wenn die Membran (33) in ihrem verformten Zustand ist.

10. Pumpe (1) nach einem der Ansprüche 3 bis 9, **dadurch gekennzeichnet, dass** die Ablassmittel aus zwei Schlitzen (26) oder Druckentlastungsrippen bestehen, die in den Stift (6) eingearbeitet, und dabei diametral gegenüberliegend sind.

11. Flakon, insbesondere für ein Kosmetikprodukt, eine Pumpe (1) nach einem der vorstehenden Ansprüche umfassend.

## Claims

1. A pump (1) for a bottle intended to contain a cosmetic product, said pump (1) comprising a variable volume metering chamber (25) defined at least in part by a deformable element (3), the pump (1) operating in varying the volume of the chamber (25) by elastic deformation of a membrane (33) of the deformable element (3) between an initial state in which the chamber (25) has a maximum volume and a deformed state in which the volume of the chamber (25) is minimal, the chamber (25) being provided with an inlet port and an outlet port of the product, the pump (1) comprising a means (9) for deforming the membrane (33) configured to exert a pressure on the membrane (33), said pump comprising means for purging air from the chamber (25) activated when the membrane (33) is in its deformed state, said purging means communicating the metering chamber (25) with the exterior of the pump (1), **characterized in that** the pump comprises an outlet valve for the exit of the product, said purging means breaking the seal of the outlet valve at the end of actuation of the pump (1), and **in that** it comprises a guide rod (6) passing through the deformable element (3), the deformable element (3) sliding along the rod (6) when the membrane (33) undergoes said deformation, the deformable element (3) comprising an outlet lip (11) delimiting said outlet port and surrounding a section of the rod (6), said outlet lip (11) coming into sealing abutment against the rod (6) or moving away from the rod (6) depending on the pressure in the chamber (25), said outlet lip (11) and the rod (6) forming said outlet valve.

2. The pump (1) according to claim 1, **characterized in that** the purged air is discharged via the outlet port of the product.

3. The pump (1) according to the preceding claim, **characterised in that** said purging means consist of at least one groove (26) or decompression rib made in the rod (6).

4. The pump (1) according to the preceding claim, **characterised in that** each groove (26) or rib extends axially along the rod (6).

5. The pump (1) according to one of claims 3 to 4, **characterised in that** each groove (26) or rib opens into the metering chamber (25).

6. The pump (1) according to one of claims 3 to 5, **characterised in that** each groove (26) or rib extends along a section of the rod (6) against which the outlet lip (11) is in contact when the membrane (33) is in its deformed state.

7. The pump (1) according to one of claims 3 to 6, **characterised in that** each groove (26) or rib extends over an axial length at least greater than the length of the outlet lip (11).

8. The pump (1) according to one of claims 3 to 7, **characterized in that** the membrane (33) has a dome shape (30) in the initial state and the deformable element (3) comprises a barrel (10) arranged at the top (29) of the dome (30), the rod (6) passing through the barrel (10) so that the barrel (10) slides along the rod (6) when the membrane (33) is deformed, the outlet lip (11) being arranged on the barrel (10), each groove (26) or rib extending over an axial length greater than the length of the barrel (10).

9. The pump (1) according to the preceding claim, **characterised in that** each groove (26) or rib extends along a section of the rod (6) located opposite the barrel when the membrane (33) is in its deformed state.

10. The pump (1) according to one of claims 3 to 9, **characterised in that** the purging means consist of two grooves (26) or decompression ribs made in the rod (6) diametrically opposite each other.

11. A bottle, in particular, for a cosmetic product, comprising a pump (1) according to any one of the preceding claims.
